# EUROPEAN PATENT SPECIFICATION

(11) **EP 0 372 387 B1**
(45) Date of publication and mention of the grant of the patent: **12.10.1994**
(21) Application number: 89122078.2
(22) Date of filing: 30.11.1989
(51) Int. Cl.: H02K 41/025, B60L 13/02, B61B 13/08

(54) **Linear motor supporting apparatus for vehicles**
Stützapparat für Fahrzeuglinearmotor
Appareil de sustentation de moteur linéaire pour véhicules

(30) Priority: 02.12.1988 JP 306618/88
(43) Date of publication of application: 13.06.1990
(73) Proprietor: Kawasaki Jukogyo Kabushiki Kaisha, Kobe-shi Hyogo 650-91 (JP)
(72) Inventor: Kobayashi, Noboru, Kobe-shi Hyogo 652 (JP); Uozumi, Yukio, Kobe-shi Hyogo 655 (JP)
(74) Representative: Reinhard - Skuhra - Weise & Partner

(56) References cited:
- DE-A- 2 032 391
- GB-A- 1 558 674
- US-A- 3 845 721

## Description

### BACKGROUND OF THE INVENTION

### Field of the Invention

The present invention relates to a linear motor supporting apparatus for vehicles such as railway cars.

### Description of the Prior Art

Various devices are known which have to keep constant the distance between the on-board coil and the ground stator of a linear motor; it is referred to US-A-3,845,721, GB-A-1,558,674 and GB-A-1,275,187. In a linear motor-propelled railroad whose track facility consists of rails on which the train runs and a linear motor reaction plate, there are some dimensional errors in laying the rails and reaction plate and their combined relative errors are large. And these errors result in variations in distance between the primary coil and reaction plate of the linear motor. To keep the primary coil on the bogie from contacting the reaction plate, there is provided a standard gap of ten odd millimeters between them. To maintain this gap requires accurate laying work and also frequent adjustments, making the system costly.

The gap of ten odd millimeters provided between the primary coil and the reaction plate is very large compared to the gap of 1 or 2 millimeters formed between the armature and stator of a rotary motor. The large gap reduces the efficiency of the linear motor.

For installing the linear motor, a structure is proposed in the Japanese Unexamined Publication No. 64251/1987, which has a dedicated support wheel to make the gap small and constant. In this prior art, the primary coil is supported by the gap-setting support wheel, which runs on both sides of the reaction plate laid on the ground. Although this construction is simple, there is a drawback that the support wheel is acted upon by the attractive force of the linear motor and thus must be robust enough to withstand that force.

### SUMMARY OF THE INVENTION

An object of the present invention is to provide a linear motor supporting apparatus for vehicles, which can make small and maintain the gap between the on-board coil of the linear motor such as a primary coil and the ground stator-another constituent member of the linear motor-such as a reaction plate with inherent laying errors, to minimize a reduction in the linear motor efficiency, without using the linear motor support wheel that can withstand high loads, without requiring a special work to enhance the laying accuracy of the reaction plate and rails, or a maintenance work to maintain the high level of dimensional accuracy of the reaction plate and rails.

According to the present invention a linear motor supporting apparatus for vehicles comprises an on-board coil mounted on a bogie; a ground stator laid on ground along the track on which the vehicles travel, the on-board coil and the ground stator together composing a linear induction motor; a means for measuring the distance between the onboard coil and the ground stator, the distance measuring means being mounted on the bogie; and a means for vertically driving the on-board coil in response to the output of the distance measuring means to keep the distance between the on-board coil and the ground stator at a predetermined value.

Further embodiments are defined by the sub-claims.

According to the present invention as provided an air-gap regulating system also on the second bogie of each car or waggon, but without the need of a second sensor member.

The apparatus of the invention further comprises: a means for restricting the lower-limit position of the servo device body with respect to the bogie; and a spring preloaded to urge the servo device body downward from the bogie.

Moreover, the apparatus of the invention comprises: a plurality of bogies making up a train; an on-board coil mounted on each bogie; a ground stator laid on ground along the track on which the train travels, the on-board coil and the ground stator together composing a linear induction motor; a means for measuring the distance between the on-board coil and the ground stator, the distance measuring means being provided to the front bogie; a means for vertically driving the on-board coil in response to a control signal to keep the distance between the on-board coil and the ground stator at a predetermined value, the drive means being provided in each bogie; a means for measuring the speed of the train; and a control means for receiving outputs from the distance measuring means and the speed measuring means and then applying the output of the distance measuring means to the drive means as a control signal with a time delay of T=L/V where V is the speed of the train and L is the distance in the direction of travel between the distance measuring means and the drive means.

According to this invention, the on-board coil such as a primary coil is mounted on the bogie and the ground stator such as a reaction plate is laid on the ground along the track, to form a linear motor. The distance between the on-board coil and the ground stator is measured, and the on-board coil is vertically moved so that the distance is kept to a predetermined value. This eliminates the need to improve the laying accuracy of the ground stator and of the rails on which the bogies travel, to an unnecessarily high level. The invention also allows the distance between the on-board coil and the ground stator to be set as small as possible, improving the efficiency of the linear motor. Furthermore, since the on-board coil is mounted to the bogie, there is no need to provide a wheel on which to support the on-board coil.

According to the invention, the distance between the on-board coil and the ground stator is measured by a sensor member that moves up and down in contact with the ground stator and, according to the displacement of the sensor member, the on-board coil position is vertically regulated by the servo device.

Moreover, according to the invention, a plurality of bogies are connected to form a single train with a distance measuring means provided only to the front bogie. The second and succeeding bogies behind the distance measuring means are given, with a time delay T, a control signal for keeping the on-board-coil-to-ground-stator distance to a predetermined value. This construction needs only one distance measuring means. It is also possible to provide a means for driving the on-board coil up and down in connection with the distance measuring means mounted on the first bogie.

### BRIEF DESCRIPTION OF THE DRAWINGS

Figure 1 is a cross-sectional view of a part of one embodiment of this invention;
Figure 2 is a simplified plan view of the embodiment shown in Figure 1;
Figure 3 is a cross-sectional view of a servo device 9;
Figure 4 is a simplified schematic diagram of another embodiment of this invention;
Figure 5 is a block diagram showing the electrical configuration of the embodiment shown in Figure 4;
Figure 6 is a cross-sectional view of a servo device 9a employed in the embodiment of Figures 4 and 5;
Figure 7 is a graph explaining the operation of a processing circuit 59; and
Figure 8 is a graph explaining the operation of the processing circuit 59 of another embodiment of the invention.

### DESCRIPTION OF THE PREFERRED EMBODIMENTS

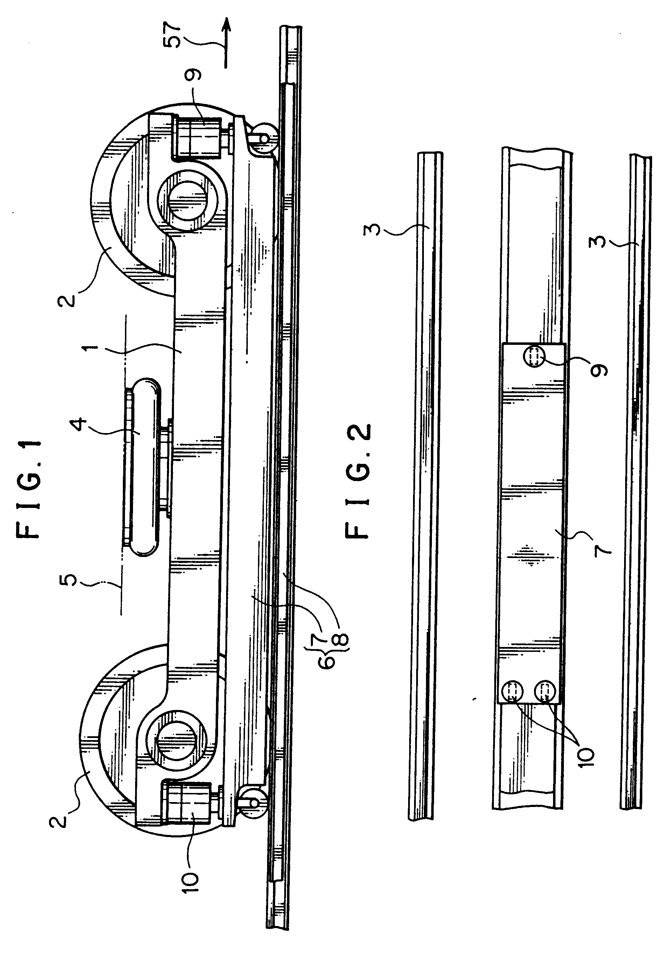

Figure 1 shows a simplified side elevation of a part of one embodiment of this invention. Figure 2 is a simplified plan view of Figure 1. A bogie or truck 1 is mounted, through springs, with wheels 2 that travel on a pair of rails 3 laid on ground in the direction of travel 57. Mounted on the bogies 1 through air springs 4 is a vehicle body 5 that carries passengers. The bogies 1 and the vehicle body 5 constitute the vehicle. Under the bogie 1 is provided an on-board primary coil 7, which comprises a part of the linear-induction motor 6. Immediately below the primary coil 7 is a reaction plate 8 laid on the ground in the direction of travel 57. The on-board primary coil 7 is mounted to the bogie 1 through three servo devices, of which one 9 is installed at the front of the bogie with respect to the direction of travel and two 10 are mounted at the rear, laterally spaced apart. The on-board primary coil 7 magnetically interacts with the reaction plate 8 to generate a force to propel the bogie 1 forward. Displacement between the primary coil 7 and the bogie 1 along the direction of travel is blocked by a means not shown. In Figure 2, the bogie 1 is omitted.

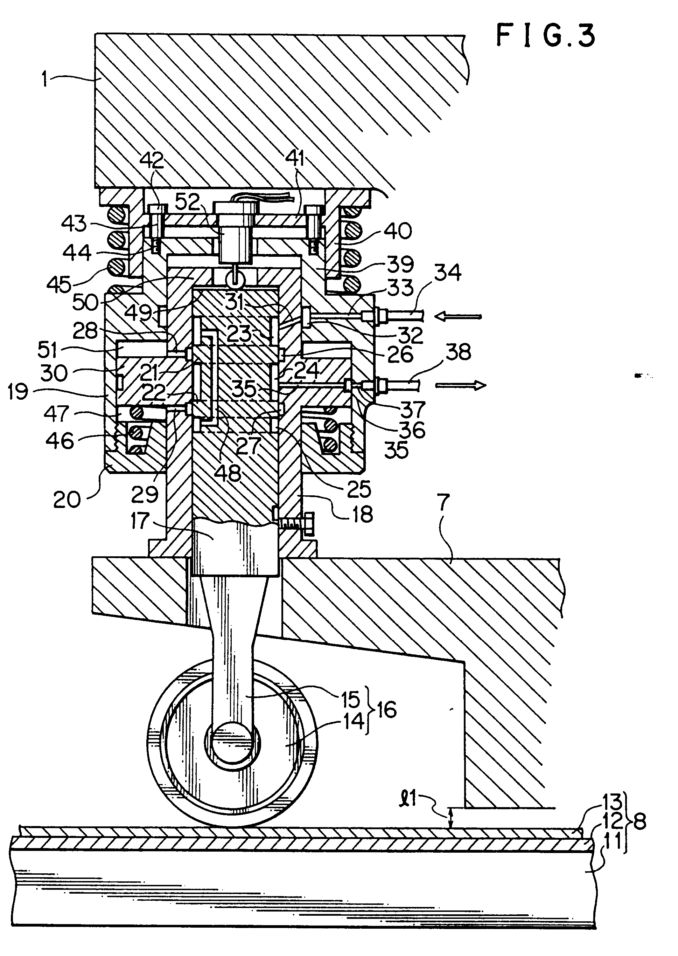

Figure 3 is a cross-sectional view of the servo device 9. As shown in the figure, the reaction plate 8 consists of a rigid base material 11, a plate 12 of ferromagnetic material placed on the base material 11, and a plate 13 made of such metals as aluminum or copper other than ferromagnetic material, these three components being secured together.

A wheel 14 running on the upper surface of the reaction plate 8 and a support rod 15 that rotatably supports the wheel 14 constitute a sensor member 16, which measures the distance ℓ1 between the primary coil 7 and the reaction plate 8.

The support rod 15 is rigidly connected to a vertically movable valve body 17 that has a vertical axis of the servo device 9. The valve body 17 is installed inside a valve box 18 which can be vertically displaced. The valve box 18 in turn is accommodated in a servo device body 19 in such a manner that it can be moved vertically in the body 19. The body 19 has an end member 20 securely attached to the lower end thereof through thread. The valve body 17 has lands 21, 22 spaced apart in axial direction, with annular small-diameter portions 23, 24, 25 formed axially adjacent to the lands. The valve box 18 is formed with annular grooves 26, 27 corresponding to the lands 21, 22, and these annular grooves 26, 27 are connected with oil holes 28, 29. The valve box 18 is formed with a piston portion 30 along the axis between the oil holes 28 and 29. The servo device body 19 is formed with an annular groove 32, which communicates with an oil hole 31 formed in the valve box 18 corresponding to the small-diameter portion 23 of the valve body 17. The body 19 is also formed with an oil passage 33 communicating with the annular groove 32. The oil passage 33 is supplied with pressurized oil from a pipe 34. The body 19 has another oil passage 37, which is connected through an annular groove 36 to an oil hole 35 formed in the piston portion 30, the oil hole 35 communicating with a space defined by the small-diameter portion 24 of the valve body 17. The oil passage 37 is connected with a pipe 38, which in turn is connected to an oil tank. The valve body 17 has an axially extending oil passage 48 formed therein that communicates the small-diameter portions 23 and 25 with each other.

The upper end portion 39 of the body 19 is formed cylindrical and fitted into a guide cylinder 40 secured to the bogie 1 in such a way that it is vertically movable. The guide cylinder 40 has a support plate 41 integrally formed therein. Support members 43 with a large-diameter head 42 are passed vertically movable through the support plate 41, and its lower end portion 44 is threaded and screwed into the upper end portion 39 of the body 19. A spring 45 encloses the guide cylinder 40 and the upper end portion 39 of the body 19 and is preloaded to urge the body 19 downwardly from the bogie 1. The head 42 of the support member 43 engages the support plate 41 thus blocking the downward displacement of the body 19 to restrict the lower limit position of the body 19 with respect to the bogie 1.

Another spring 46 is installed in the body 19 between the end member 20 and the piston portion 30 to urge the valve box 18 upwardly with respect to the body 19.

The axial length of the land 21 of the valve body 17 (in the vertical direction in Figure 3) is set slightly larger than the axial length of the annular groove 26 so that a blind zone is formed. This construction is also employed for the other land 22 and the corresponding annular groove 27. In the state of Figure 3, the lands 21, 22 close the annular grooves 26, 27.

Let us consider a situation in which, during operation, the sensor member 16 is lifted up from the state of Figure 3 due to laying errors of the reaction plate 8. As the valve body 17 moves up, the working oil from the pipe 34 flows through the oil passage 33 and annular groove 32 in the body 19, the oil passage 31 in the valve box 18, the small-diameter portion 23 of the valve body 17 and the axially extending oil passage 48 formed in the valve body 17 and to the small-diameter portion 25 of the valve body 17, from which the oil further flows through the oil passage 29 into a chamber 47 where the spring 46 is installed. As a result, the piston portion 30 is pushed up by the hydraulic pressure. The piston portion 30 moves up following the motion of the valve body 17 until the annular grooves 26, 27 are closed by the lands 21, 22. Therefore, the upward displacement of the valve box 18 equals the upward displacement of the valve body 17. As the valve box 18 moves up, the primary coil 7 which is integral with the valve box 18 also moves up. In this way, the primary coil 7 follows the vertical variations in the reaction plate 8, thus keeping the distance ℓ1 between the primary coil 7 and the reaction plate 8 constant. The reaction force of the servo device is sustained by the bogie 1 through the body 19, spring 45 and support member 43.

Should there be an abnormal projection on the reaction plate 8 or when the primary coil 7 comes into contact with the reaction plate 8, the servo device 9 may not be able to respond quickly enough. In this case, the upper end portion 49 of the valve body 17 may abut the upper end portion 50 of the valve box 18, the oil pressure in a chamber 51 on the upper side of the piston portion 30 may increase, or the upper end portion of the valve box 18 may strike the upper end portion of the body 19, exerting an excess force on the sensor member 16 and the valve body 17. The spring 45 solves this problem. When the valve box 18 abruptly moves up, the body 19 also moves up compressing the spring 45. The spring 45 is preloaded and, when applied with a compressive force in excess of the preloading force, is compressed. If the spring 45 was not given any precompression, it would easily be compressed even with a slight vibrating load, making the servo device unstable. With this construction, the sensor member 16 and the valve body 17 are prevented from being burdened with an excessive force.

When there is an oil leakage, the reduced oil pressure will render it impossible for the servo device 9 to drive the valve box 18 following the motion of the valve body 17. In such a case, the hydraulic oil in the chamber 51 above the piston portion 30 is discharged through the oil passage 28 and the force of the spring 46 causes the valve box 18 and therefore the primary coil 17 to move upward, thus preventing the sensor member 16 from being burdened with a reaction force of supporting the primary coil 7. As for the remaining servo devices 10, their constructions are similar to that of the above servo device 9. The combined use of these three servo devices 9, 10 for a single primary coil 7 ensures that a torsion moment is prevented from being applied to the primary coil 7 when there is a twist in the reaction plate 8, or when there is a relative deviation between the rails 3 and the reaction plate 8, or when the vehicle is running on a curved track. As another embodiment of the invention, it is possible to provide four or more servo devices 9, 10. When four servo devices are used, it is necessary to make the forces between any two servo devices equal by an equalizer that works as a balance.

In another embodiment of the invention, there is provided a displacement sensor 52 in connection with the servo device 9. The displacement sensor 52 is rigidly mounted to the support plate 41 of the guide cylinder 40 and passes through the valve box 18 and the body 19. The displacement sensor 52 is intended to detect the amount of vertical displacement of the valve body 17 relative to the bogie 1 and convert it into electric signal. The distance ℓ1 between the primary coil 7 and the reaction plate 8 therefore can be measured by the displacement sensor 52.

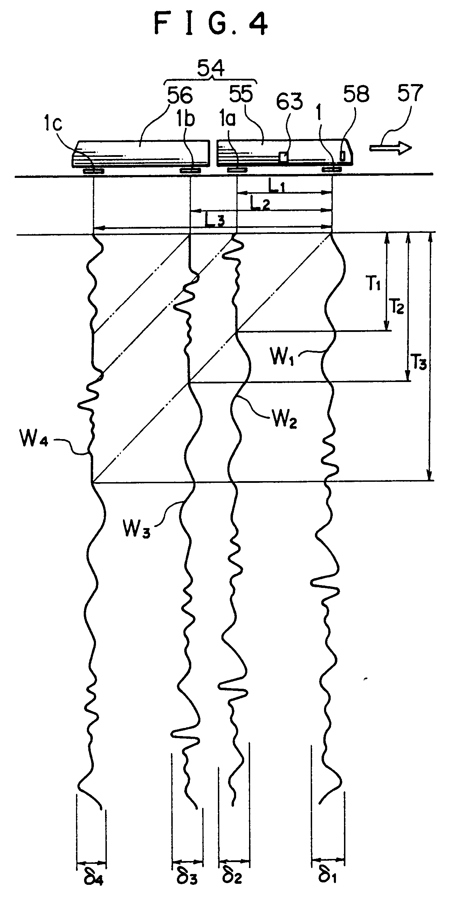

Figure 4 is a simplified schematic diagram of yet another embodiment of this invention equipped with the displacement sensor 52. A train 54 consists of a plurality of cars 55, 56 (in this case two) connected together and travels in the direction of arrow 57. At the front (with respect to the direction of travel) of the car 55, the bogie 1, which has been described with reference to Figures 1 to 3, is installed. At the rear of the car 55 another bogie 1a is provided. The second car 56 is provided with bogies 1b, 1c. In this embodiment, the output of the displacement sensor 52 in the servo device 9 for the bogie 1 has a waveform W1 of Figure 4.

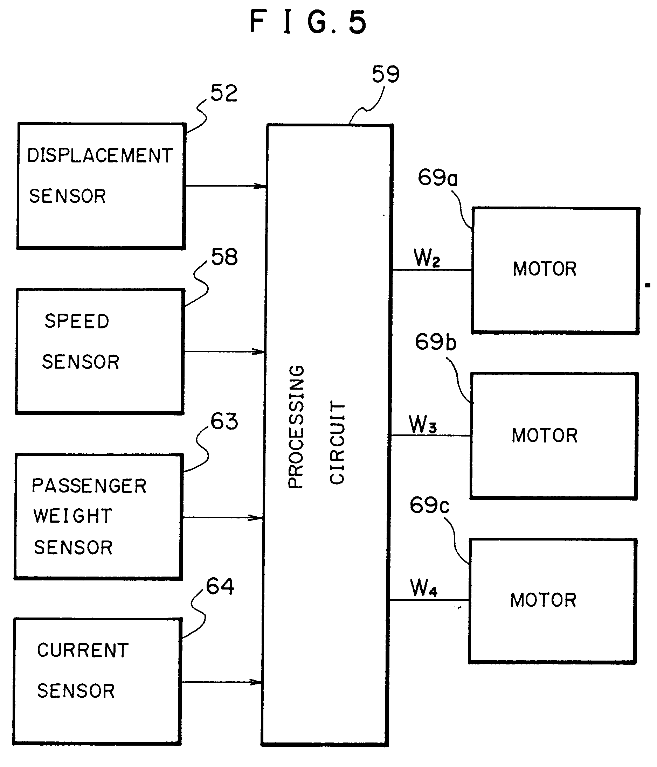

Figure 5 is a block diagram showing the electrical configuration of the embodiment of Figure 4. The speed of the train 54 is detected by a speed sensor 58. The outputs of the displacement sensor 52 and the speed sensor 58 are fed to a processing circuit 59, which is made up of a microcomputer. The processing circuit 59 then drives motors 69a, 69b, 69c installed in the bogies 1a, 1b, 1c, respectively. The control signals applied to these motors 69a, 69b, 69c are indicated by reference symbols W2, W3 and W4 in Figure 4. Let L1 stand for the distance from the displacement sensor 52 of the bogie 1 to the corresponding position of the bogie 1a. Likewise, let L2 and L3 stand for the distances from the displacement sensor 52 of the bogie 1 to the corresponding positions of the bogies 1b, 1c. Also let the speed of the train detected by the speed sensor 58 be V. The waveforms W2, W3, W4 are delayed from the waveform W1 of the displacement sensor 52 by times T1, T2, T3, respectively before being applied to the motors 69a, 69b, 69c.$\text{T1 =} \frac{\text{L1}}{\text{V}}$$\text{T2 =} \frac{\text{L2}}{\text{V}}$$\text{T3 =} \frac{\text{L3}}{\text{V}}$

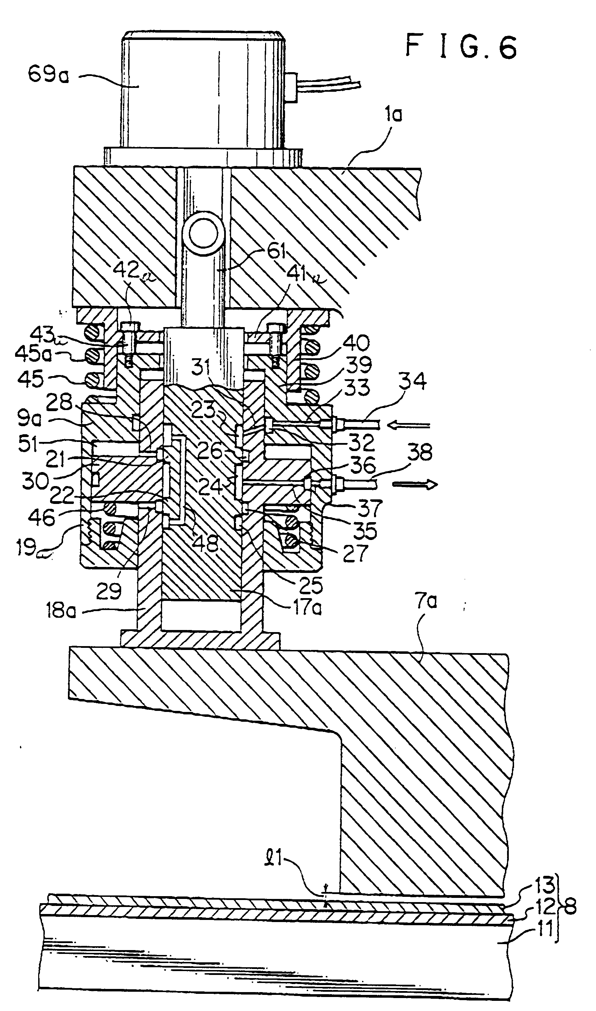

Figure 6 is a cross-sectional view of a servo device 9a mounted on the bogie 1a which corresponds to the servo device 9 on the bogie 1. This servo device 9a resembles the abovementioned servo device 9 of Figure 3, with the corresponding parts represented by the same numerals attached with a subscript a. It should be noted that in this embodiment the valve body 17a is connected to a drive shaft 61, which is driven vertically by the motor 69a.

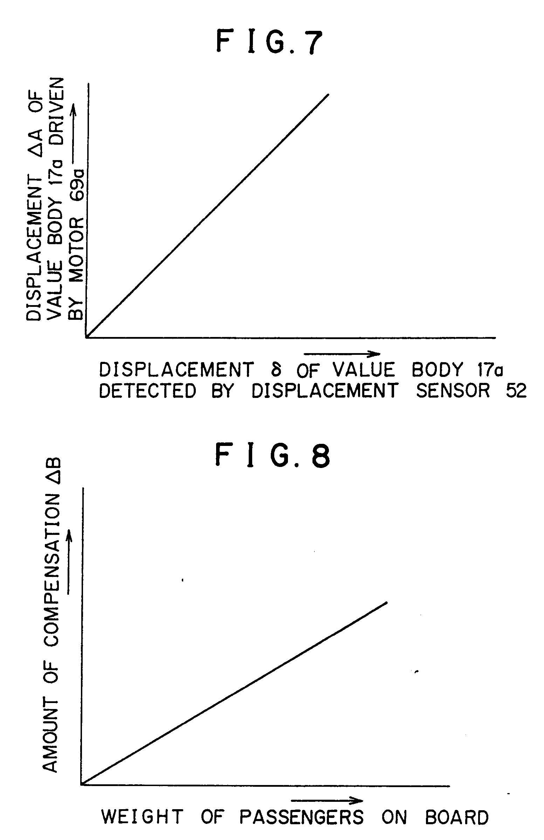

Figure 7 is a graph showing the relationship between a displacement ΔA of the valve body 17a driven by the motor 69a, which is controlled by the processing circuit 59, and a displacement δ of the same as detected by the displacement sensor 52 with respect to the state of Figure 3, which is taken as a reference. The displacement δ detected by the displacement sensor 52 is proportional to the displacement ΔA of the valve body 17a driven by the motor 69a. It should be noted, however, that the control signal for the motor 69a to produce the displacement ΔA is delayed by the time duration T1 from the moment the displacement sensor 52 has detected the deviation. The spring 45a prevents the primary coil 7a from being burdened with an excessive force when the primary coil 7a contacts the reaction plate 8. The time duration T1 may include such delay factors as the time required by hydraulic oil to flow into the servo device 9a and the operation delay of the motor 69a. The same also applies to the time durations T2, T3.

Although the foregoing description concerns the servo device 9 for the bogie 1 and the similar servo device 9a for the bogie 1a, the same construction can be used with the servo device 10 for the bogie 1 and with the similar servo device 10a for the bogie 1a. All these also apply to the bogies 1b, 1c.

With these embodiments, it is possible to keep constant the gap ℓ1 between the primary coil 7a and the reaction plate 8 regardless of the weight of passengers boarding the cars 55, 56. Referring again to Figure 5, the weight of passengers is measured by the weight sensor 63 provided in the car 55. When the passenger weight or the current value changes after the first bogie has passed a given point, the second and succeeding bogies will compensate for that change when they pass the same point. These sensor signals are supplied to the processing circuit 59 which generates a control signal to be applied to the motor 69a. As shown in Figure 8, the compensation or correction value ΔB is set to increase in proportion to an increase in the passenger weight. The compensation value ΔB is added to the control signal, which is given to the motor 69a. Then, the primary coil 7a will be shifted up toward the bogie 1a, keeping the gap ℓ1 constant.

As still another embodiment of the invention, the following compensation method is also possible. The current fed to the primary coil 7a is measured by a current sensor 64. When the current increases, the control signal to the motor 69a is modified to cause the primary coil 7a to move up toward the bogie 1a. As the current of the primary coil 7a increases, the bogie 1a will be shifted downwardly by the magnetic attraction of the primary coil 7a and reaction plate 8. However, since the motor 69a causes the primary coil 7a to move up toward the bogie 1a as mentioned above, the distance ℓ1 is kept at a predetermined constant value. The same also applies to the second car 56.

In the above embodiments, four bogies 1, 1a, 1b, 1c are used for a single train. In the case of a long train hauling many bogies, for example, 20 bogies, it is possible to divide them into two groups, each consisting of ten bogies and to provide a displacement sensor 52 to the first bogie of each group in order to achieve the abovementioned compensation control. This helps simplify the construction of the servo devices.

As explained above, since this invention can maintain at a small and almost constant value the gap between the on-board coil and the ground stator (reaction plate), both constituting the linear-induction motor, the reduction in linear motor efficiency can be minimized. Furthermore, even when there are variations in distance between the rails on which the bogies travel and the reaction plate, the gap between the on-board coil and the ground stator can be kept constant. This eliminates the need for a complicated control to enhance the accuracy of laying the rails and reaction plate, which in turn eliminates the maintenance service and reduces cost.

## Claims

1. A linear motor supporting apparatus for vehicles comprising:
a first bogie (1) and a second bogie (1a);
a first on-board coil (7) mounted on said first bogie;
a ground stator (8) laid on ground along the track (3) on which the vehicles travel, the first on-board coil (7) and the ground stator (8) together composing a linear-induction motor;
at least one sensor measuring means (16) placed in contact with the ground stator and adapted to move up or down following the contour of the ground stator (8), said sensor measuring means (16) detecting the distance between the first on-board coil (7) and the ground stator (8), wherein said sensor measuring means (16) is mounted in association with said first bogie (1),
a displacement sensor (52) mounted on said first bogie (1) and coupled with said sensor means (16) for producing an output corresponding to the distance between the first on-board coil (7) and the ground stator (8) and for producing an output to keep the distance between the first on-board coil (7) and the ground stator (8) at a predetermined value,
a first servo means (9; 10) to respond to said sensor measuring means (16) to vertically drive the first on-board coil (7) to keep the distance between the first on-board coil (7) and the ground stator (8) at a predetermined value,
a second on-board coil (7a) mounted on said second bogie (1a),
a time delay calculating means for calculating a time delay which occurs between the first bogie (1) and the second bogie (1a) as the vehicle is in motion,
a second servo means mounted on said second bogie (1a) to receive said output from said displacement sensor (52) with said time delay and to vertically drive said second on-board coil (7a) to keep the distance between the second on-board coil (7a) and the ground stator (8) at a predetermined value.

2. A linear motor supporting apparatus according to claim 1, wherein said first servo means (9, 10) comprises:
a first valve body (17) connected to the sensor member (16);
a first valve box (18) secured to the first on-board coil (7), said first valve box (18) accomodating the first valve body (17) in such a way that the first valve body (17) can be moved vertically therein; and
a first servo device body (19) for accomodating the first valve box (18) in such a way that the first valve box (18) can be moved vertically therein, the first servo device body (19) being mounted on said first bogie (1) and being adapted to cause, by hydraulic pressure, the first valve box (18) to move up or down following the vertical motion of the first valve body (19).

3. A linear motor supporting apparatus according to claim 1 or 2, wherein said second servo means comprises: a second valve body (17a);
a second valve box (18a) secured to the second on-board coil (7a), said second valve box (18a) accomodating said second valve body (17a) in such a way that the second valve body (17a) can be moved vertically therein: and
a second servo device body (19a) for accomodating the second valve box (18a) in such a way that the second valve box (18a) can be moved vertically therein, the second servo device body (19a) being mounted on said second bogie (la) and being adapted to cause, by hydraulic pressure, the second valve box (18a) to move up and down for driving the second on-board coil (7a).

4. A linear motor supporting apparatus according to claim 2, wherein said first servo means further includes
a first means (41, 42, 43) for restricting the lower-limit position of the first servo device body (19) with respect to the bogie (1); and
a first spring (45) preloaded to urge the first servo device body (19) downward from the bogie (1).

5. A linear motor supporting apparatus according to claim 3, wherein said second servo means further includes
a second means (41a, 42a, 43a) for restricting the lower limit position of the second servo device body (19a) with respect to the second bogie (1a) and
a second spring (45a) preloaded to urge the second servo device body (19a) downward from the bogie (1a).

6. A linear motor supporting apparatus according to claim 1, wherein said time delay calculating means includes means (58) for measuring vehicle speeds;
a control means (59) for receiving outputs of the displacement sensor (52) and the vehicle speed measuring means (58) and applying the output of the displacement sensor (52) to the driving means (69a, 69b, 69c) as a control signal with a time delay of T = L/V,
where V is a vehicle speed and L is a distance in the direction of travel between the sensor member (16) and the driving means (69a, 69b, 69c).

## Patentansprüche

1. Vorrichtung zur Lagerung eines Linearmotors für Fahrzeuge, welche aufweist:
ein erstes Fahrgestell (1) und ein zweites Fahrgestell (1a);
eine erste An-Bord-Spule (7), welche auf dem ersten Fahrgestell montiert ist;
einen Grundstator (8), welcher auf dem Boden entlang der Fahrspur (3), auf der die Fahrzeuge fahren, aufgelegt ist, wobei die erste An-Bord-Spule (7) und der Grundstator (8) zusammen einen Linearinduktionsmotor bilden;
wenigstens eine Sensormeßeinrichtung (16), welche in Kontakt mit dem Grundstator plaziert ist und die sich aufwärts und abwärts der Kontur des Grundstators (8) folgend, bewegen kann, und welche den Abstand zwischen der ersten An-Bord-Spule (7) und dem Grundstator (8) erfaßt, wobei die Sensormeßeinrichtung (16) auf das erste Fahrgestell (1) montiert ist;
einen Verschiebungssensor (52), welcher auf dem ersten Fahrgestell (1) montiert ist und mit der Sensormeßeinrichtung (16) verbunden ist, um ein Ausgangssignal entsprechend dem Abstand zwischen der ersten An-Bord-Spule (7) und dem Grundstator (8) zu erzeugen und um ein Ausgangssignal, mit welchem der Abstand zwischen der ersten An-Bord-Spule (7) und dem Grundstator (8) auf einem vorbestimmten Wert gehalten wird, zu erzeugen;
eine erste Servorvorrichtung (9;10), um auf die Sensormeßeinrichtung (16) zu reagieren und die erste An-Bord-Spule (7) vertikal so zu führen, daß der Abstand zwischen der An-Bord-Spule (7) und dem Grundstator (8) auf einem vorbestimmten Wert gehalten wird;
eine zweite An-Bord-Spule (7a), welche auf dem zweiten Fahrgestell (1a) montiert ist;
eine Zeitverzögerungsberechnungseinheit zur Berechnung der Zeitverzögerung, welche zwischen dem ersten Fahrgestell (1) und dem zweiten Fahrgestell (1a) auftritt, wenn sich das Fahrzeug in Bewegung befindet;
eine zweite Servovorrichtung, welche auf dem zweiten Fahrgestell (1a) montiert ist, zum zeitverzögerten Empfang des Ausgangssignals des Verschiebungssensors (52) und um die zweite An-Bord-Spule (7a) so zu führen, daß der Abstand zwischen der zweiten An-Bord-Spule (7a) und dem Grundstator (8) auf einem vorbestimmten Wert gehalten wird.

2. Vorrichtung nach Anspruch 1, dadurch gekennzeichnet, daß die erste Servoeinrichtung (9;10) aufweist:
einen ersten Ventilkörper (17), welcher mit dem Sensorbauelement (16) verbunden ist;
ein erstes Ventilgehäuse (18), das an der ersten An-Bord-Spule (7) befesigt ist, wobei das erste Ventilgehäuse (18) den ersten Ventilkörper (17) so aufnimmt, daß sich der erste Ventilkörper (17) darin vertikal bewegen kann; und
einen ersten Servovorrichtungskörper (19) zur Aufnahme des ersten Ventilgehäuses (18) in der Weise, daß das erste Ventilgehäuse (18) sich vertikal darin bewegen kann, wobei ein erster Servovorrichtungskörper (19) auf dem ersten Fahrgestell (1) montiert ist und imstande ist, mittels hydraulischem Druck das erste Ventilgehäuse (18) zu veranlassen, sich nach oben oder unten, der vertikalen Bewegung des ersten Ventilkörpers (19) folgend, zu bewegen.

3. Vorrichtung nach Anspruch 1 oder 2, dadurch gekennzeichnet, daß die zweite Servovorrichtung aufweist:
einen zweiten Ventilkörper (17a);
ein zweites Ventilgehäuse (18a), welches an der zweiten An-Bord-Spule (7a) befestigt ist, wobei das zweite Ventilgehäuse (18a) den zweiten Ventilkörper (17a) so aufnimmt, daß der zweite Ventilkörper (17a) sich darin vertikal bewegen kann; und einen zweiten Servovorrichtungskörper (19a), um das zweite Ventilgehäuse (18a) in der Weise aufzunehmen, daß das zweite Ventilgehäuse (18a) sich darin vertikal bewegen kann, wobei der zweite Servovorrichtungskörper (19a) an dem zweiten Fahrgestell montiert ist und imstande ist, mittels hydraulischem Druck das zweite Ventilgehäuse (18a) zu veranlassen, sich auf und ab zu bewegen, um die zweite An-Bord-Spule (7a) anzutreiben.

4. Vorrichtung nach Anspruch 2, dadurch gekennzeichnet, daß die erste Servovorrichtung weiterhin eine erste Einrichtung (41,42,43) zur Begrenzung der unteren Grenzposition des ersten Servovorrichtungskörpers (19) bezüglich des Fahrgestells (1); und eine erste Feder (45) aufweist, welche vorgespannt ist, um den ersten Servovorrichtungskörper (19) nach unten weg vom Fahrgestell (1) zu drücken.

5. Vorrichtung nach Anspruch 3, dadurch gekennzeichnet, daß die zweite Servoeinrichtung weiterhin
eine zweite Einrichtung (41a,42a,43a) zur Begrenzung der unteren Grenzposition des zweiten Servovorrichtungskörpers (19a) hinsichtlich des zweiten Fahrgestells (1a) und
eine zweite Feder (45a) aufweist, welche vorgespannt ist, um den zweiten Servovorrichtungskörper (19a) nach unten vom Fahrgestell (1a) zu drücken.

6. Vorrichtung nach Anspruch 1, dadurch gekennzeichnet, daß die Zeitverzögerungsberechnungseinheit eine Einheit (58) zur Messung der Fahrzeuggeschwindigkeit beinhaltet;
eine Steuereinrichtung (59) für den Empfang der Ausgangssignale des Verschiebungssensors (52) und der Fahrzeuggeschwindigkeitsmeßeinrichtung (58) und zum Anlegen des Ausgangssignals des Verschiebungssensors (52) an die Antriebseinrichtungen (69a,69b,69c) als Steuersignal mit einer Zeitverzögerung von T=L/V, wobei V die Fahrzeuggeschwindigkeit und L die Distanz in Fahrtrichtung zwischen dem Sensorbauelement (16) und den Antriebseinrichtungen (69a,69b, 69c) ist.

## Revendications

1. Dispositif de support de moteur linéaire pour véhicules, comprenant :
un premier bogie (1) et un second bogie (1a) ;
une première bobine embarquée (7) montée sur ledit premier bogie ;
un stator au sol (8) placé sur le sol le long de la voie ferrée (3) sur laquelle les véhicules se déplacent, la première bobine embarquée (7) et le stator au sol (8) composant ensemble un moteur linéaire à induction ;
au moins un moyen de mesure par capteur (16) placé en contact avec le stator au sol et adapté à se déplacer vers le haut ou vers le bas suivant le contour du stator au sol (8), ledit moyen de mesure par capteur (16) détectant la distance entre la première bobine embarquée (7) et le stator au sol (8), dans lequel ledit moyen de mesure par capteur (16) est monté en association avec ledit premier bogie (1),
un capteur de déplacement (52) monté sur ledit premier bogie (1) et relié audit moyen capteur (16) pour produire une sortie correspondant à la distance entre la première bobine embarquée (7) et le stator au sol (8) et pour produire une sortie destinée à maintenir à une valeur prédéterminée la distance entre la première bobine embarquée (7) et le stator au sol (8),
un premier moyen d'asservissement (9 ; 10) pour répondre audit moyen de mesure par capteur (16) pour déplacer verticalement la première bobine embarquée (7) pour maintenir à une valeur prédéterminée la distance entre la première bobine embarquée (7) et le stator au sol (8),
une seconde bobine embarquée (7a) montée sur ledit second bogie (1a),
un moyen de calcul de retard pour calculer un retard qui se produit entre le premier bogie (1) et le second bogie (1a) lorsque le véhicule est en mouvement,
un second moyen d'asservissement monté sur ledit second bogie (1a) pour recevoir ladite sortie venant dudit capteur de déplacement (52) avec ledit retard et pour déplacer verticalement ladite seconde bobine embarquée (7a) pour maintenir à une valeur prédéterminée la distance entre la seconde bobine embarquée (7a) et le stator au sol (8).

2. Dispositif de support de moteur linéaire selon la revendication 1, dans lequel ledit premier moyen d'asservissement (9, 10) comprend :
un premier corps de valve (17) relié à l'élément capteur (16) ;
une première boîte à valve (18) fixée à la première bobine embarquée (7), ladite première boîte à valve (18) logeant le premier corps de valve (17) de manière à y permettre le déplacement vertical du premier corps de valve (17) ; et
un premier corps de dispositif d'asservissement (19) pour loger la première boîte à valve (18) de telle manière que la première boîte à valve (18) puisse être déplacée verticalement à l'intérieur de celui-ci, le premier corps de dispositif d'asservissement (19) étant monté sur ledit premier bogie (1) et étant adapté à provoquer, par une pression hydraulique, la montée ou la descente de la première boîte à valve (18) suivant le mouvement vertical du premier corps de valve (17).

3. Dispositif de support de moteur linéaire selon la revendication 1 ou 2, dans lequel ledit second moyen d'asservissement comprend :
un second corps de valve (17a) ;
une seconde boîte à valve (18a) fixée à la seconde bobine embarquée (7a), ladite seconde boîte à valve (18a) logeant ledit second corps de valve (17a) de telle manière que le second corps de valve (17a) puisse y être déplacé verticalement ; et
un second corps de dispositif d'asservissement (19a) pour loger la seconde boîte à valve (18a) de telle manière que la seconde boîte à valve (18a) puisse être déplacée verticalement à l'intérieur de celui-ci, le second corps de dispositif d'asservissement (19a) étant monté sur ledit second bogie (1a) et étant adapté à provoquer, par une pression hydraulique, la montée et la descente de la seconde boîte à valve (18a) pour entraîner la seconde bobine embarquée (7a).

4. Dispositif de support de moteur linéaire selon la revendication 2, dans lequel ledit premier moyen d'asservissement comprend en outre
un premier moyen (41, 42, 43) pour limiter la position limite inférieure du premier corps de dispositif d'asservissement (19) par rapport au bogie (1) ; et
un premier ressort (45) soumis à une précharge pour pousser le premier corps de dispositif d'asservissement (19) vers le bas à partir du bogie (1).

5. Dispositif de support de moteur linéaire selon la revendication 3, dans lequel ledit second moyen d'asservissement comprend en outre
un second moyen (41a, 42a, 43a) pour restreindre la position limite inférieure du second corps de dispositif d'asservissement (19a) par rapport au second bogie (1a), et
un second ressort (45a) soumis à une précharge pour pousser le second corps de dispositif d'asservissement (19a) vers le bas à partir du bogie (1a).

6. Dispositif de support de moteur linéaire selon la revendication 1, dans lequel ledit moyen de calcul de retard comprend un moyen (58) pour mesurer les vitesses du véhicule ;
un moyen de commande (59) pour recevoir les sorties du capteur de déplacement (52) et du moyen de mesure de vitesse de véhicule (58) et pour fournir la sortie du capteur de déplacement (52) au moyen d'entraînement (69a, 69b, 69c), sous la forme d'un signal de commande avec un retard de T = L/V, où V est une vitesse du véhicule et L est une distance dans le sens du déplacement entre l'élément capteur (16) et le moyen d'entraînement (69a, 69b, 69c).
